# EUROPEAN PATENT APPLICATION

(11) **EP 4 723 353 A2**
(43) Date of publication of application: **08.04.2026**
(21) Application number: 25220777.4
(22) Date of filing: 08.02.2024
(51) Int. Cl.: H01M 50/383

(54) **BATTERY DEVICE**

(30) Priority: 09.02.2023 KR 20230017541
(62) Divisional of application: 24156695.9
(71) Applicant: SK On Co., Ltd., Seoul 03161 (KR)
(72) Inventor: SHIN, Suk Ho, 34124 Daejeon (KR); KANG, Min Song, 34124 Daejeon (KR); KIM, Ji Woong, 34124 Daejeon (KR); PAK, Byeong Jun, 34124 Daejeon (KR); PARK, Ju Yong, 34124 Daejeon (KR); SAGONG, Kang, 34124 Daejeon (KR); SON, Sol San, 34124 Daejeon (KR)
(74) Representative: Stolmár & Partner Patentanwälte PartG mbB

(57) **Abstract**

A battery device is disclosed, the battery device may include a plurality of cell assemblies including a plurality of battery cells; and a housing accommodating the plurality of cell assemblies therein, wherein upper surfaces of the plurality of cell assemblies may be spaced apart from the housing by a certain distance, a first venting passage may be formed in the housing facing the upper surfaces of the plurality of cell assemblies, and a second venting passage may be formed in a space between first side surfaces of the plurality of cell assemblies and the housing.

## Description

### TECHNICAL FIELD

Embodiments of the present disclosure relate to a battery device for improving safety.

### BACKGROUND

Unlike primary batteries, secondary batteries may be charged and discharged of electricity, so the secondary batteries may be applied to various fields such as digital cameras, mobile phones, laptop computers, hybrid cars, and electric vehicles. Among the secondary batteries, a large amount of research is being conducted into lithium secondary batteries with high energy density and discharge voltage. Lithium secondary batteries are manufactured as pouch-type battery cells having flexibility, or prismatic battery cells or cylindrical can-type battery cells having rigidity.

A plurality of battery cells are mounted on a case in a unit of cell stacks which are stacked and electrically connected to each other to form a battery module or pack. These battery devices are commonly installed and used in electric vehicles, or the like.

However, in such a conventional battery device, when one cell stack ignites, heat or flames may easily be transferred to another, adjacent cell stack, which may cause secondary ignition or explosion. Therefore, a battery device that can prevent secondary ignition or explosion is required.

### SUMMARY

According to an embodiment of the present disclosure, it is possible to prevent secondary ignition or explosion from occurring due to flame or high-temperature gas generated within a battery device.

A battery device in accordance with embodiments of the present disclosure may be widely applied in green technology fields such as electric vehicles, battery charging stations, solar power generation, wind power generation using other batteries, and the like. In addition, the battery device in accordance with embodiments of the present disclosure may be used in eco-friendly electric vehicles, hybrid vehicles, or the like, to help mitigate climate change by suppressing air pollution and greenhouse gas emissions.

In an embodiment of the present disclosure, a battery device, may include: a plurality of cell assemblies including a plurality of battery cells; and a housing accommodating the plurality of cell assemblies therein, wherein upper surfaces of the plurality of cell assemblies may be spaced apart from the housing by a certain distance, a first venting passage may be formed in the housing facing the upper surfaces of the plurality of cell assemblies, and a second venting passage may be formed in a space between first side surfaces of the plurality of cell assemblies and the housing.

In an embodiment of the present disclosure, the housing may include a side wall housing forming an internal space in which the plurality of cell assemblies are accommodated, an upper housing covering an upper portion of the internal space, and a lower housing covering a lower portion of the internal space, and the second venting passage may be formed between the side wall housing and the plurality of cell assemblies.

In an embodiment of the present disclosure, the second venting passage includes a plurality of second venting passages, wherein the plurality of second venting passages may be formed to correspond to each of the cell assemblies, a partition wall member partitioning the internal space may be disposed inside the housing, and the plurality of second venting passages may be separated from each other by the partition wall member.

In an embodiment of the present disclosure, the first venting passage may be formed in a form of grooves on an inner surface of the upper housing.

In an embodiment of the present disclosure, the first venting passage may include a plurality of linear passages disposed in parallel, and each of the linear passages may be disposed on an upper portion of the second upper venting passage.

In an embodiment of the present disclosure, the first venting passage may be disposed throughout a region facing the upper surfaces of the plurality of cell assemblies.

In an embodiment of the present disclosure, a gas discharge member disposed on the side wall housing and connected to the second venting passage may be further included, and gas flowing into the second venting passage may be discharged externally from the housing through the gas discharge member.

In an embodiment of the present disclosure, a direction of movement of the gas flowing into the second venting passage may be changed at least once by the gas discharge member.

In an embodiment of the present disclosure, the partition wall member may include a support frame fastened to the lower housing and a blocking frame disposed between the support frame and the upper housing, and the blocking frame may be disposed to face a terminal of the cell assembly.

In an embodiment of the present disclosure, the blocking frame may be formed of a material melting at a temperature higher than that of the support frame, and a fireproof member may be disposed on a surface of the blocking frame.

In an embodiment of the present disclosure, a cell assembly among the plurality of cell assemblies may include a cell stack in which a plurality of battery cells are stacked, and a case protecting the cell stack, and the case may include a first case covering an upper surface of the cell stack and having a plurality of first venting holes formed therein and a second case covering the first side surface and having a plurality of second venting holes formed therein.

In an embodiment of the present disclosure, each of the linear passages may be formed in a position, corresponding to at least one of the plurality of first venting holes.

In an embodiment of the present disclosure, in the cell assembly, a terminal may be disposed on a second side surface, opposite to the first side surface.

In an embodiment of the present disclosure, the second case may include a protruding frame protruding outwardly from a lower portion of the second venting hole and fastened to the side wall housing.

In an embodiment of the present disclosure, the upper housing may include steel or stainless steel.

In an embodiment of the present disclosure, a battery device, may include: a side wall housing forming an internal space in which a plurality of cell assemblies are accommodated, an upper housing covering an upper portion of the internal space, a lower housing covering a lower portion of the internal space, a first venting passage formed between the upper surfaces of the plurality of cell assemblies and the upper housing, partition wall members dividing the internal space into a plurality of compartments, and a second venting passage formed in each of the plurality of compartments between first side surfaces of the plurality of cell assemblies in the each of the plurality of compartments and the side wall housing.

### BRIEF DESCRIPTION OF DRAWINGS

Certain aspects, features, and advantages of the present disclosure are illustrated by the following detailed description with reference to the accompanying drawings.
FIG. 1 is an exploded perspective view of a battery device according to an embodiment of the present disclosure.
FIG. 2 is a partially exploded perspective view of FIG. 1.
FIG. 3 is a plan view of the battery device shown in FIG. 1.
FIG. 4 is a partial cross-sectional view taken along line I-I' of FIG. 2.
FIG. 5 is a partial cross-sectional view taken along line II-II' of FIG. 2.
FIG. 6 is a partial cross-sectional view taken along line III-III' of FIG. 2.
FIG. 7 is a perspective view illustrating the cell assembly shown in FIG. 2 in another direction.
FIG. 8 is an exploded perspective view of a battery device according to another embodiment of the present disclosure.
FIG. 9 is a cross-sectional view taken along line IV-IV' of FIG. 8.

### DETAILED DESCRIPTION

Hereinafter, various embodiments of the present disclosure are described by embodiments with reference to the accompanying drawings. In addition, in the following description, expressions such as upper side, upper portion, lower side, lower portion, side surface, and the like are illustrated based on the drawings, and may be expressed differently if the direction of the object is changed.

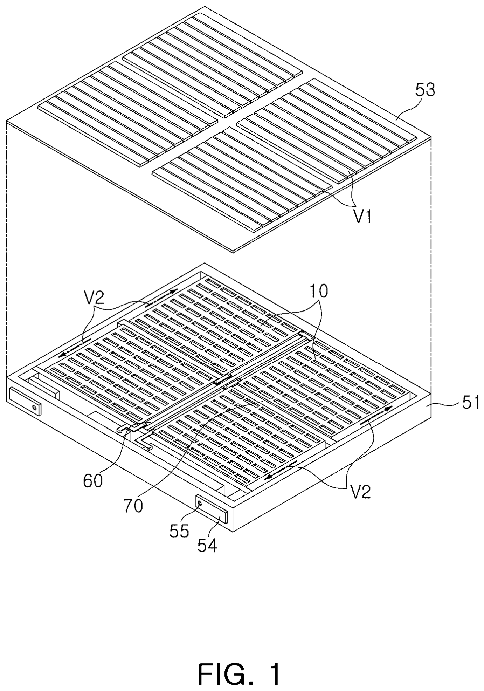

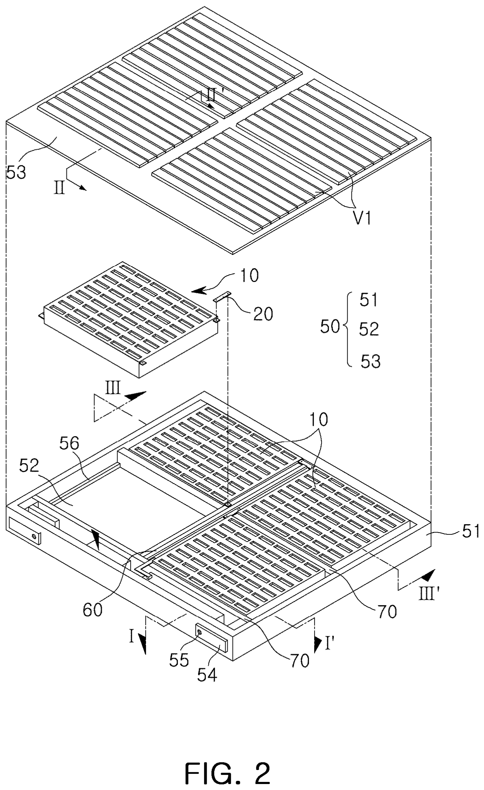

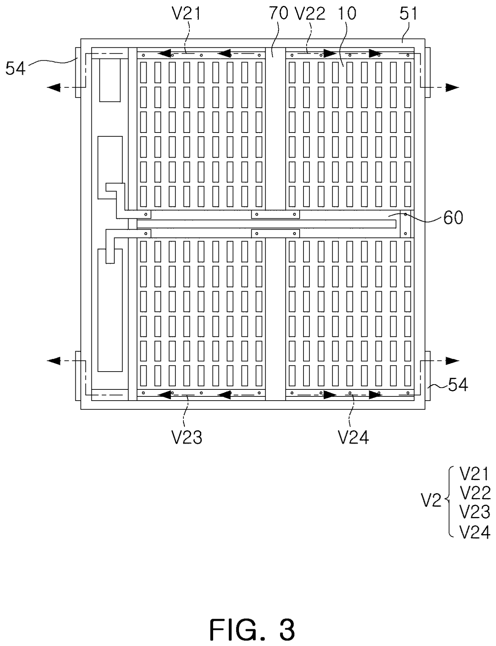

FIG. 1 is an exploded perspective view of a battery device according to an embodiment of the present disclosure, and FIG. 2 is a partially exploded perspective view of FIG. 1. In addition, FIG. 3 is a plan view of the battery device illustrated in FIG. 1, with an upper housing omitted for convenience of illustration.

Referring to FIGS. 1 to 3, a battery device 1 according to an embodiment of the present disclosure may include a housing 50 (51, 52, 53) and a cell assembly 10.

The housing 50 may comprise an upper housing 53, a lower housing 52 and a side wall housing 51. The housing may provide an accommodation space for accommodating other components therein. The housing 50 may form an enclosure surrounding the cell assemblies 10. The cell assemblies 10 may be disposed side by side forming a plurality of rows within the accommodation space of the housing 50.

The housing 50 may be formed of a metal material to ensure rigidity, but embodiments of the present disclosure are not limited thereto. For example, the housing may be formed of steel or stainless steel to withstand a high temperature generated therein due to explosion of battery cells, or the like. In addition, for increasing a heat dissipation effect the housing 50 may be formed of aluminum, or an aluminum alloy or at least a portion of the housing 50 may be formed of aluminum or an aluminum alloy.

The housing 50 may include a side wall housing 51 forming an internal space, a lower housing 52 covering a lower portion of the internal space, and an upper housing 53 covering an upper portion of the internal space.

The side wall housing 51 may form an outer surface of the housing 50 and may define an internal space. Accordingly, the cell assemblies 10 may be accommodated within the internal space defined by the side wall housing 51. The cell assemblies 10 may be seated on the lower housing 52.

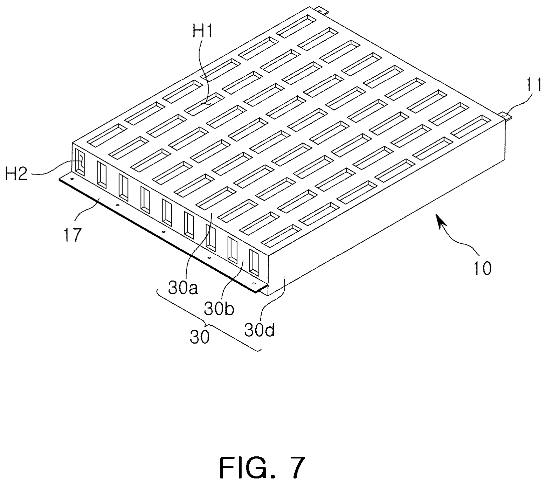

The side wall housing 51 may include a support block 56. The support block 56 is a portion protruding from the side wall housing 51 toward the cell assembly 10, which means a portion disposed below a protruding frame (17 in FIG. 7) of the cell assembly 10 described below, to be coupled to the protruding frame 17. Accordingly, the support block 56 may be formed to protrude from a lower end portion of the side wall housing 51 toward a space accommodating the cell assembly 10, and at least a portion of the support block 56 may support a lower portion of the protruding frame 17. An empty space may be provided between the side wall housing 51 and the cell assembly 10, and such an empty space may be used as a second venting passage V2.

The second venting passage V2 may be used as a passage through which explosive by-products move externally from the battery device 1, when explosive by-products such as gas are discharged from the cell assembly 10 due to ignition of a battery cell. Accordingly, the explosive by-products described above may move to one side through the second venting passage V2, and then be discharged externally from the housing 50 through a gas outlet 55 provided in the side wall housing 51. As a result, rapid propagation of flame and heat, and secondary damage resulting therefrom may be minimized.

The side wall housing 51 may include a gas discharge member 54.

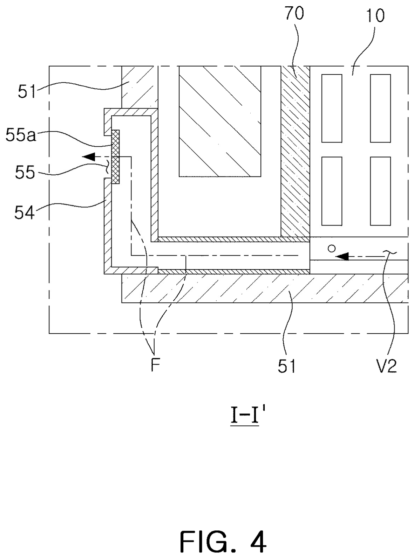

FIG. 4 is a partial cross-sectional view taken along line I-I' of FIG. 2. FIG. 4, referring to FIG.2 together, the gas discharge member 54 may be coupled to the side wall housing 51 to form a portion of the side wall housing 51, and may be formed in a form of an empty tube therein.

One end of the gas discharge member 54 may be open and connected to a second venting passage V2 to be described later, and a gas outlet 55 may be formed at the other end of the gas discharge member 54. Accordingly, gas flowing in the second venting passage V2 may flow into the inside of the gas discharge member 54 and then be discharged externally of the battery device 1 through the gas outlet 55.

The gas outlet 55 may be used as a passage through which gas generated in an internal space of the side wall housing 51 is discharged externally of the side wall housing 51. A member 55a capable of being opened and closed may be disposed in the gas outlet 55, or a valve which opens above a certain pressure may be disposed. For example, the member 55a may be formed of a material having waterproofness and moisture permeability and can be fractured above a certain temperature or a certain pressure. However, the embodiments of the present disclosure are not limited thereto.

The gas discharge member 54 may be formed of steel or stainless steel to withstand high-temperature gas. However, the embodiments of the present disclosure are not limited thereto.

The battery device 1 of an embodiment has four cell assemblies 10 disposed in the housing 50, and as illustrated in FIG. 3, four second venting passages V21, V22, V23, and V24 may be formed independently of each other to correspond to the four cell assemblies 10. For example, each of the second venting passages V2 may be completely separated from each other by partition wall members 60 and 70, which will be described later, and may be discharged externally through different gas outlets 55. Therefore, even if explosive by-products are discharged from one cell assembly 10, the impact or influence on other cell assemblies 10 during the process of the explosive by-products being discharged externally can be minimized.

Each second venting passage V2 may be connected to at least one of the gas discharge members 54. For example, four gas discharge members 54 may be distributed and disposed in corner portions of the housing corresponding to the number of cell assemblies 10. However, the configuration of the embodiments of the present disclosure are not limited thereto, and the number of cell assemblies 10 and second venting passages V2 may be variously changed as needed, and the number of gas discharge members 54 may also be changed to correspond to the number of the second venting passages V2.

Since an internal space of the gas discharge member 54 is used as a venting path, the second venting passage V2 in an embodiment may be understood as a concept including an internal path of the gas discharge member 54.

In an embodiment, an overall venting path of the second venting passage V2 may be formed to be curved. For example, a direction of movement of gas (F in FIG. 4) of the second venting passage V2 may be changed at least once by the gas discharge member 54. Accordingly, a direction of movement of the gas flowing between the cell assembly 10 and the side wall housing 51 (hereinafter, a first direction) and a direction of movement of the gas flowing within the gas discharge member 54 (hereinafter, a second direction) may be different directions.

The first direction and the second direction may be orthogonal to each other. Therefore, the gas moving between the side wall housing and the cell assembly may flow into the gas discharge member 54 and the direction of movement of gas (F) may be changed by 90°.

In addition, in an embodiment, a direction in which gas is discharged through the gas outlet 55 may be a first direction. Accordingly, the gas moving inside the gas discharge member 54 may change a direction thereof by 90° and may be discharged externally through the gas outlet 55.

As described above, when the second venting passage V2 is formed to be curved, the direction of movement of gas may be changed and a flow of flame or dust discharged together with the gas may be suppressed. Therefore, it is possible to minimize flame or dust being discharged externally from the battery device 1.

The upper housing 53 may be disposed above the cell assembly 10, and cover the entire assembly 10, and may be coupled to the side wall housing 51.

A first venting passage V1 may be formed in the upper housing 53 of an embodiment.

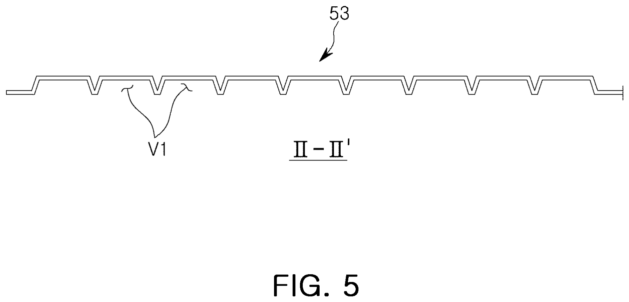

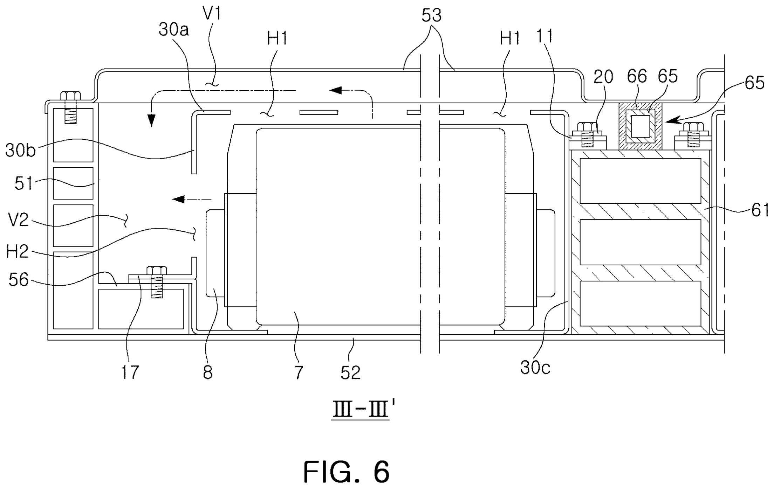

FIG. 5 is a partial cross-sectional view taken along line II-II' of FIG. 2, and FIG. 6 is a partial cross-sectional view taken along line III-III' of FIG. 2. Referring to FIGS. 5 and 6, together with FIG. 2, a plurality of first venting passages V1 may be disposed in parallel corresponding to one cell assembly 10, and each of the first venting passages V1 may be formed in a form of grooves, on an inner surface of the upper housing 53. For example, the upper housing 53 may be drawn to form a plurality of grooves and used as a first venting passage V1.

The first venting passage V1 may be disposed in an entire region of the upper housing 53 facing the upper surface of the plurality of cell assemblies 10. Accordingly, gas generated in the cell assembly 10 can easily flow into the first venting passage V1.

The gas generated in the cell assembly 10 may move upwardly from the cell assembly 10 and flow into the first venting passage V1, and then move along the first venting passage V1 to be discharged via the second venting passage V2, which will be described later.

To this end, the first venting passage V1 may include a plurality of linear passages disposed in parallel with each other, and one end of each of the linear passages may be disposed above the second venting passage V2 and meet the second venting passage V2, and the other end, an opposite side thereof, may be disposed on a side of a first partition wall member 60, to be described later.

Each first venting passage V1 may be disposed to correspond to a first venting hole H1 of a cell assembly 10, to be described later. For example, one first venting passage V1 may be disposed above one first venting hole H1, and accordingly, gas generated from the first venting hole H1 may flow into the corresponding first venting passage V1.

As the first venting passage V1 is formed in the upper housing 53, high-temperature gas may directly contact the upper housing 53. Therefore, the upper housing 53 of an embodiment may include a material with a high melting point, such as steel or stainless steel, or an inorganic binder such as aerogel or synthetic mica may be stacked and disposed on an upper surface thereof.

Partition wall members 60 and 70 may be disposed inside the housing 50.

The partition wall members 60 and 70 may be disposed across an internal space formed by a side wall housing 51 to partition the internal space into a plurality of compartments. At least a portion of the partition wall members 60 and 70 may be fastened to the side wall housing 51.

The partition wall members 60 and 70 may reinforce the overall rigidity of the housing 50. In addition, the partition wall members 60 and 70 because they are disposed between the cell assemblies 10 can prevent gas or flame from propagating between the cell assemblies 10.

Specifically, the partition wall members 60 and 70 may be disposed to cross between two cell assemblies 10 disposed to face each other.

Accordingly, the cell assemblies 10 may be distributed and disposed in a plurality of accommodation spaces partitioned by the side wall housing 51 and the partition wall members 60 and 70. Accordingly, the above-described second venting passages V2 may be formed independently of each other by the partition wall members 60 and 70.

The partition wall members 60 and 70 of an embodiment may include at least one first partition wall member 60 disposed in a first direction, and at least one second partition wall member 70 disposed in a second direction. The first and second directions may be perpendicular to each other.

The first partition 60 may have both ends fastened to the side wall housing 51 to bisect the internal space of the side wall housing 51. However, the embodiments of the present disclosure are not limited thereto, and one end or both ends thereof may be fastened to a second partition wall member 70. Accordingly, a plurality of first partition wall members 60 may be further disposed in various positions.

As illustrated in FIG. 6, the first partition 60 may be disposed to face one surface of the side surfaces of the cell assemblies on which a terminal 11 is disposed, and may include a support frame 61 and a blocking frame 65 coupled to an upper portion of the support frame 61.

The support frame 61 may be coupled to a lower housing 52, and may have a certain width. In an embodiment, the terminal 11 of the cell assembly 10 may be located above the support frame 61 and disposed to face the blocking frame 65.

The blocking frame 65 may block heat or explosive by-products from propagating to other compartments through a gap between the support frame 61 and the upper housing 53. That is, the blocking frame 65 may be provided to seal respective compartments in which the cell assemblies 10 are distributed and disposed as much as possible.

To this end, the blocking frame 65 may be coupled to the upper housing 53 so that a lower surface of the blocking frame 65 is coupled to the support frame 61 and an upper surface thereof is in surface contact with the upper housing 53. Accordingly, the first venting passage V1 may not be formed in a portion of the upper housing 53 contacting the blocking frame 65.

The support frame 61 may be formed of the same material as that of the lower housing 52. For example, the support frame 61 may include aluminum or aluminum alloy. However, the embodiments of the present disclosure are not limited thereto, and the support frame 61 may also be formed of a material melting at a temperature, higher than that of the lower housing 52.

In addition, when the blocking frame 65 is formed of a material with a low melting point, when explosive by-products are discharged from the cell assembly 10, the blocking frame 65 may easily melt due to contact with the explosive by-products. Therefore, the blocking frame 65 may be formed of a material melting at a temperature higher than that of the support frame 61. For example, a portion of the blocking frame 65 facing the terminal 11 may be formed of a metal such as steel or a material containing an inorganic binder such as aerogel or synthetic mica. In addition, the blocking frame 65 may also be manufactured through post-processing such as coating, heat treatment, and the like, to reinforce heat resistance, fire resistance, strength, and rigidity.

In an embodiment, the blocking frame 65 may be disposed to face the terminal 11, so that the blocking frame 65 may directly contact the explosive by-products discharged near the terminal 11. To this end, fireproof members 66, melting at a temperature of 700° C or higher may be stacked and disposed on a surface of the blocking frame 65.

The fireproof member 66 may be disposed to surround both side surfaces of the blocking frame 65. Here, both side surfaces of the blocking frame 65 refer to a surface facing the cell assembly 10. However, the embodiments of the present disclosure are not limited thereto, and the fireproof member 66 may also be disposed on the upper or lower surface of the blocking frame 65.

Since the fireproof member 66 should block the propagation of high-temperature gas or flame, the fireproof member 66 may be formed of a flame-retardant material, a non-combustible material, or a fireproof insulating material. For example, the fireproof member 66 may be formed of a material including ceramic and that can be fire-resistance/insulation, a material formed by applying an inorganic binder such as aerogel or mica or a gel-type insulating material containing sodium silicate onto a thin film or by using a sheet-shaped material made using the same, and a fibrous refractory insulating material such as ceramic wool or glass fiber with flame retardant performance.

In addition, the fireproof member 66 may include or be formed of a rubber material containing a ceramic with heat-blocking properties, or may include or be formed of a rubber material containing expandable graphite, so that when exposed to heat, graphite expands rapidly to form an insulating layer.

The fireproof member 66 may be formed as a sheet or film and may be attached to a surface of the blocking frame 65. However, the embodiments of the present disclosure are not limited thereto.

FIG. 7 is a perspective view of the cell assembly shown in FIG. 2 in another direction.

Referring to FIG. 7, a cell assembly 10 may include a secondary battery cell such as a lithium battery, a nickel-hydrogen battery, or the like, capable of being charged and discharged. In the cell assembly 10, a cell stack in which a plurality of battery cells are stacked and formed in a hexahedral shape may be accommodated in a case 30, or fixed in a stacked state by a bracket, or the like. The cell assembly 10 may further include a bus bar-related component electrically connecting battery cells to each other, but since this is a known technology, description thereof will be omitted.

The case 30 may define an external shape of the cell assembly 10, and may be disposed externally of the cell stack in which the battery cells 7 are stacked to protect the cell stack from an external environment. At the same time, the case 30 of an embodiment may also be used as a heat dissipation member of the cell stack.

The case 30 may be provided in a form surrounding all or part of the cell stack. The case 30 may be formed of a metal material to ensure rigidity, but the embodiments of the present disclosure are not limited thereto. In addition, in order to increase a heat dissipation effect, at least a portion of the case 30 may be formed of aluminum or aluminum alloy.

For easy manufacturing of the cell assembly 10, the case 30 may be divided into multiple cases. In addition, among the cases 30 of an embodiment, a first venting hole H1 may be formed in a first case 30a covering an upper surface of the cell stack, and a second venting hole H2 may be formed in a second case 30b covering the first side surface.

The first venting hole H1 may be disposed in a position, corresponding to the first venting passage V1 of the above-described upper housing 53. For example, a plurality of linear passages forming the first venting passage V1 may each be formed in a position, corresponding to at least one of the plurality of first venting holes H1.

Accordingly, a portion of the gas generated in the cell assembly 10 may pass through the first venting hole H1 and enter the first venting passage V1. A plurality of first venting holes H1 may be distributed and disposed, corresponding to one first venting passage V1. In an embodiment, the first venting hole H1 is formed as a rectangular through-hole, but the configuration of the embodiments of the present disclosure are not limited thereto.

The second case 30b may be formed to extend from the first case 30a, and may be disposed on a first side surface among the side surface of the cell stack facing the second venting passage V2.

A plurality of second venting holes H2 may be formed in the second case 30b. The second venting hole H2 may be disposed toward the second venting passage V2, and thus a portion of the gas generated in the cell stack may pass through the second venting hole H2 and enter the second venting passage V2. The plurality of second venting holes H2 may be distributed and disposed in a longitudinal direction of the second case 30b. In an embodiment, each of the second venting holes H2 is formed as a rectangular through-hole, but the configuration of the embodiments of the present disclosure are not limited thereto.

In addition, a protruding frame 17 which is seated and coupled to the support block 56 of the side wall housing 51 may be formed in the second case 30b. The protruding frame 17 may be formed as a portion of the case 30 of the cell assembly 10, and may be seated on the support block 56 and then fixed and fastened to the support block 56 through a fastening member such as a bolt or screw.

The protruding frame 17 may be disposed below the second venting hole H2. Therefore, an upper space of the protruding frame 17 may be used as a second venting passage V2.

In an embodiment, the second case 30b may be formed integrally with the first case 30a. For example, one sheet of metal plate may be bent and divided into a first case 30a and a second case 30b. However, the configuration of the embodiments of the present disclosure are not limited thereto, and the first case and the second case may also be separately prepared, respectively, and coupled to each other.

As shown in FIG. 6, in an embodiment, the battery cell 7 has an electrode lead 8 disposed in both directions, and within the cell assembly 10, each battery cell 7 is disposed to face a first side surface and a second side surface. The second case 30b may be located on the first side surface and disposed to face the electrode leads 8 of the battery cells 7.

The second side surface refers to a side surface, opposite to the first side surface. The case 30 of an embodiment may include a third case 30c covering the second side surface, and a fourth case 30d covering the remaining side surfaces excluding the first and second side surfaces.

A terminal 11 may be provided on the second side surface. The terminal 11 may be formed of a conductive member exposed externally from the case 30 of the battery device 1 and may be fastened to the connection member 20 which is shown in FIG. 2. The connection member 20 may connect one battery device 1 and the terminal 11 of another neighboring battery device 1 to each other.

Both ends of the connection member 20 may be respectively fastened to the terminal 11 of the battery device 1, which are different from each other through a fastening member such as a bolt.

When using a plurality of battery devices 1 of an embodiment, each of the battery devices 1 may be connected to each other in series or parallel through a connection member 20. In addition, if necessary, a portion of the battery devices 1 may be connected in series and some may be connected in parallel.

The connection member 20 may be formed by processing a flat rod-shaped conductive member. In addition, the connection member 20 may be formed of a flexible material. However, the configuration of the embodiments of the present disclosure are not limited thereto, and it is also possible to use wires or cables as the connection member 20.

The fourth case 30d may cover side surfaces of the battery devices 1 on which an electrode lead 8 is not disposed, and may be fixed and fastened to the first case 30a, the second case 30b, and the third case 30c through welding, bolts, or the like.

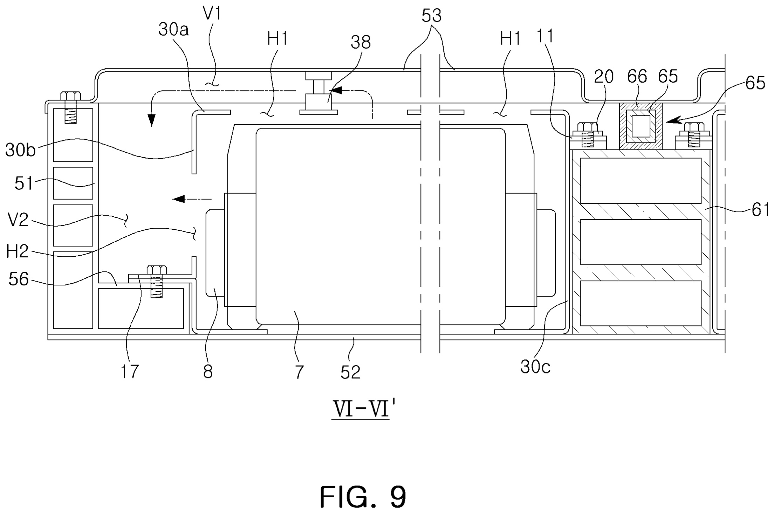

In the battery device 1 of an embodiment as described above, the first venting passage V1 is connected to the second venting passage V2 so that gas generated in the battery cell 7 (see FIG. 9) may flow into the upper housing 53 through the first venting hole H1 of the cell assembly 10 and then moved along the first venting passage V1 into the second venting passage V2, or may flow directly into the second venting passage V2 through the second venting hole H2 formed in the second case 30b of the cell assembly 10. As described above, in the battery device 1 of an embodiment, the gas generated in the battery cell 7 may be discharged through two paths, so the gas can be discharged quickly and the impact or influence of the gas can be minimized.

The battery device 1 of an embodiment may include four cell assemblies 10, and the four cell assemblies 10 may discharge gas through different second venting passages V2. Therefore, even if gas is discharged from one cell assembly 10, the impact or influence of the high-temperature gas on the other cell assemblies 10 can be minimized.

In addition, in the battery device 1 of an embodiment, since the gas generated in the battery cell 7 is discharged to the side wall housing 51 rather than to the partition wall member 60 and 70, even if one cell assembly 10 explodes, the influence of the high-temperature gas on the other cell assemblies 10 beyond the partition wall members 60 and 70 may be minimized.

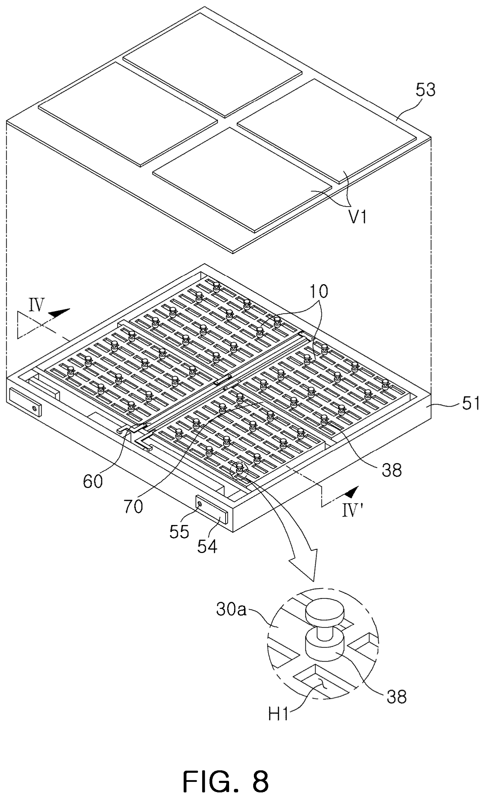

FIG. 8 is an exploded perspective view of a battery device according to another embodiment of the present disclosure, and FIG. 9 is a cross-sectional view taken along line IV-IV' of FIG. 8.

Referring to FIGS. 8 and 9, a first venting passage V1 of an embodiment may not be formed of a plurality of linear passages as in the above-described embodiments, but may be formed of one first venting passage V1 for one cell assembly 10. Accordingly, one first venting passage V1 may be formed in a size corresponding to an entire upper surface of one cell assembly 10.

Since the battery device of an embodiment includes four cell assemblies 10, four first venting passages V1 may be formed on an upper portion of the corresponding cell assemblies 10, respectively.

The first venting passage V1 of an embodiment may also be formed in a form of grooves by drawing an upper housing 53. In this case, when the size of the cell assembly 10 increases, a portion of the upper housing 53, forming the first venting passage V1 may be partially deformed due to insufficient rigidity.

To this end, the battery device of an embodiment may include a plurality of support members 38.

A support member 38 may be disposed between the upper housing 53 and the cell assembly 10, and one end of the support member 38 may be coupled to an upper surface of the cell assembly 10 and the other end of the support member 38 may support a lower surface of the upper housing 53. Accordingly, the support member 38 may be disposed in the first venting passage V1 to maintain a separation distance between the upper housing 53 and the cell assembly 10.

A support member 38 may be disposed between first venting holes H1, and the plurality of support members 38 may be distributed and disposed.

A support member 38 may be formed in various shapes as long as the support member 38 may support the upper housing 53. In addition, the support member 38 may be formed of an insulating material for insulation between the upper housing 53 and the cell assembly 10, but the embodiments of the present disclosure are not limited thereto.

As set forth above, according to an embodiment of the present disclosure, each of a plurality of cell assemblies may discharge gas through different venting passages.

Therefore, even if gas is discharged from one cell assembly, the impact or influence of high-temperature gas on other cell assemblies may be minimized.

Only specific examples of implementations of certain embodiments are described. Variations, improvements and enhancements of the disclosed embodiments and other embodiments may be made based on the present disclosure.

For example, the above-described embodiments may be implemented by deleting some components, and each embodiment may be implemented in combination with each other.

## Claims

1. A battery device comprising:
a plurality of cell assemblies including a plurality of battery cells; and
a housing accommodating the plurality of cell assemblies therein; and
a gas discharge member disposed in the housing,
wherein upper surfaces of the plurality of cell assemblies are spaced apart from the housing by a certain distance,
a first venting passage is formed in the housing facing the upper surfaces of the plurality of cell assemblies, and
a second venting passage is formed in a space between first side surfaces of the plurality of cell assemblies and the housing,
wherein gas flowing into the second venting passage is discharged externally from the housing through the gas discharge member.

2. The battery device of claim 1, wherein the gas flowing into the second venting passage changes a direction of movement of gas at least once by the gas discharge member.

3. The battery device of claims 1 or 2, wherein the housing comprises
a side wall housing forming an internal space in which the plurality of cell assemblies are accommodated;
an upper housing covering an upper portion of the internal space; and
a lower housing covering a lower portion of the internal space,
wherein the second venting passage is formed between the side wall housing and the plurality of cell assemblies.

4. The battery device of claim 3, wherein the second venting passage includes a plurality of second venting passages, the plurality of second venting passages formed to correspond to each of the cell assemblies,
wherein a partition wall member partitioning the internal space is disposed inside the housing, and
wherein the plurality of second venting passages are separated from each other by the partition wall member.

5. The battery device of claim 3, wherein the first venting passage is formed in a form of grooves on an inner surface of the upper housing.

6. The battery device of anyone of preceding claims, wherein the first venting passage comprises a plurality of linear passages disposed in parallel, and a portion of each of the linear passages are disposed on an upper portion of the second venting passage.

7. The battery device of anyone of preceding claims, wherein the first venting passage is disposed throughout a region facing the upper surfaces of the plurality of cell assemblies.

8. The battery device of claim 4, wherein the partition wall member comprises
a support frame fastened to the lower housing; and
a blocking frame disposed between the support frame and the upper housing,
wherein the blocking frame is disposed to face a terminal of the cell assembly.

9. The battery device of claim 8, wherein the blocking frame is formed of a material melting at a temperature, higher than that of the support frame, and
a fireproof member is disposed on a surface of the blocking frame.

10. The battery device of claim 6, wherein a cell assembly among the plurality of cell assemblies comprises a cell stack in which a plurality of battery cells are stacked, and a case protecting the cell stack, and
wherein the case comprises a first case covering an upper surface of the cell stack and having a plurality of first venting holes formed therein, and a second case covering the first side surface and having a plurality of second venting holes formed therein.

11. The battery device of claim 10, wherein each of the linear passages is formed in a position corresponding to at least one of the plurality of first venting holes.

12. The battery device of claims 10 or 11, wherein in the cell assembly, a terminal is disposed on a second side surface, opposite to the first side surface.

13. The battery device of anyone of claims 10 to 12, wherein the second case comprises a protruding frame protruding outwardly from a lower portion of the second venting hole and fastened to the side wall housing.

14. The battery device of anyone of claims 3 to 5, wherein the upper housing comprises steel or stainless steel.
